# EUROPEAN PATENT APPLICATION

(11) **EP 2 199 909 A2**
(43) Date of publication of application: **23.06.2010**
(21) Application number: 09179685.4
(22) Date of filing: 17.12.2009
(51) Int. Cl.: G06F 9/48, G06F 9/445

(54) **Terminal equipment and application list display method**

(30) Priority: 19.12.2008 JP 2008323999
(71) Applicant: NTT DoCoMo, Inc., Tokyo 100-6150 (JP)
(72) Inventor: Nakajima, Ryo, Tokyo 100-6150 (JP); Asai, Mao, Tokyo 100-6150 (JP); Yamaguchi, Kumiko, Tokyo 100-6150 (JP)
(74) Representative: Viering, Hans-Martin

(57) **Abstract**

A terminal equipment and an application list display method are provided to display a list of identification information of applications in such a manner that a user can readily recognize a setup state of each application requiring setup of predetermined information in a data memory area. A terminal equipment 1 has a setup necessity determining unit 4 which refers to attribute information of an application to determine whether predetermined information to be used in running of the application needs to be preliminarily set in a setup information memory unit 52; and a setup state determining unit 6 which refers to the setup information memory unit 52 to determine whether the predetermined information is already set in a predetermined format, when the setup necessity determining unit 4 determines that the predetermined information needs to be set. When the setup state determining unit 6 determines that the predetermined information is not set yet, identification information of the application is displayed in a discriminable state from that in the case of the predetermined information being already set, in a list on a display unit 9.

## Description

### BACKGROUND OF THE INVENTION

### Field of the Invention

The present invention relates to a terminal equipment and an application list display method for displaying a list of identification information of executable applications.

### Related Background of the Invention

The mobile communication terminal equipment with a noncontact IC card is in widespread use in recent years and there are increasing applications to perform communication through the noncontact IC card to carry out a billing process or the like. For using such an application, it is necessary to set predetermined information, e.g., user's personal information or a credit card number in a memory of the noncontact IC card. Usually, this setup is carried out upon first-time execution of the application. Therefore, the application cannot be used immediately after simply downloaded onto the terminal equipment. Since whether the predetermined information is already set up is managed as application-specific attribute information, it can be discriminated by starting the application. It is also described that attribute information of an image file is acquired and that an indication about the attribute information is displayed along with an icon of the image file (cf. Japanese Patent Application Laid-open No. 2008-072514: Patent Document 1).

### SUMMARY OF THE INVENTION

In general, a setup state of the predetermined information necessary for use of the application using the noncontact IC card is first recognized after the application is started and access to the memory of the noncontact IC card is executed. It is cumbersome to start each application in order to recognize the setup state of the predetermined information thereof as described above, and it is less convenient to users.

The present invention has been accomplished in order to solve the above problem and an object of the present invention is therefore to provide a terminal equipment and an application list display method permitting a user to readily recognize a setup state of an application requiring setup of predetermined information in a data memory area.

In order to solve the above problem, a terminal equipment according to the present invention is a terminal equipment for displaying a list including identification information of an executable application, the terminal equipment comprising: attribute information storing means which stores attribute information of the application; setup necessity determining means which refers to the attribute information of the application to determine whether predetermined information to be used in running of the application needs to be preliminarily set in a data memory area; setup state determining means which refers to the data memory area to determine whether the predetermined information is already set in a predetermined format, when the setup necessity determining means determines that the predetermined information needs to be set; and application list displaying means which, when the setup state determining means determines that the predetermined information is not set yet, displays the identification information of the application in a discriminable state from that in the case of the predetermined information being already set.

In order to solve the above problem, an application list display method according to the present invention is an application list display method in a terminal equipment for displaying a list including identification information of an executable application, the application list display method comprising: an attribute information storing step of storing attribute information of the application; a setup necessity determining step of referring to the attribute information of the application to determine whether predetermined information to be used in running of the application needs to be preliminarily set in a data memory area; a setup state determining step of referring to the data memory area to determine whether the predetermined information is already set in a predetermined format, when the setup necessity determining step results in determining that the predetermined information needs to be set; and an application list displaying step of, when the setup state determining step results in determining that the predetermined information is not set yet, displaying the identification information of the application in a discriminable state from that in the case of the predetermined information being already set.

In the terminal equipment and the application list display method of the present invention, it is determined whether the predetermined information in use of the application needs to be set, and if the predetermined information needs to be set and if the predetermined information is not yet set in the predetermined format, the identification information of the application is displayed in the list thereof in the discriminable state from that in the case of the predetermined information being already set. Therefore, the user is allowed to readily recognize the setup state of the application requiring the setup of the predetermined information in the data memory area. The "predetermined format" stated herein embraces a storage location, a data size, a data pattern, and so on in storage of the predetermined information in the data memory area.

In the terminal equipment of the present invention, the setup necessity determining means determines whether the attribute information includes collation data, thereby determining whether the predetermined information needs to be set. Since in this configuration the necessity for the setup of the predetermined information is determined based on inclusion of the collation data in the attribute information of the application, it is feasible to readily decide whether the determination on the setup state is needed.

In the terminal equipment of the present invention, the attribute information includes address data indicative of a storage location where the predetermined information is to be set in the data memory area, and collation data; based on the address data, the setup state determining means retrieves setup data stored at the storage location indicated by the address data, from the data memory area and determines whether the setup data agrees with the collation data retrieved by the setup necessity determining means, thereby determining whether the predetermined information is already set. In this configuration, the setup data is retrieved based on the address data included in the attribute information and the setup state of the predetermined information is determined by determining whether the setup data agrees with the collation data. Therefore, the user is allowed to readily and appropriately recognize the setup state of the application.

In the terminal equipment of the present invention, the data memory area is included in a noncontact IC card.

In the terminal equipment and the application list display method of the present invention, it is determined whether the predetermined information in use of the application needs to be set, and if the predetermined information needs to be set and if the predetermined information is not set in the predetermined format, the identification information of the application is displayed in the list thereof in the discriminable state from that in the case of the predetermined information being already set. Therefore, the user is allowed to readily recognize the setup state of the application requiring the setup of the predetermined information in the data memory area.

### BRIEF DESCRIPTION OF THE DRAWINGS

Fig. 1 is a functional block diagram of a terminal equipment.

Fig. 2 is a hardware block diagram of the terminal equipment.

Fig. 3 is a drawing showing an example of a configuration of applications stored in an application memory unit 3, an example of a structure of an application attribute file, and an example of a data structure of a decision key.

Fig. 4 is a drawing showing an example of a structure of a setup information memory unit.

Fig. 5 is a drawing showing an example of a structure of a menu display image memory unit.

Fig. 6 is a drawing showing a processing procedure of an application list display method in the terminal equipment.

Fig. 7 is a drawing showing screen examples of application list display on a display unit.

### DESCRIPTION OF THE PREFERRED EMBODIMENTS

A terminal equipment according to an embodiment of the present invention will be described with reference to the drawings. Identical portions will be denoted by the same reference symbols as much as possible, without redundant description.

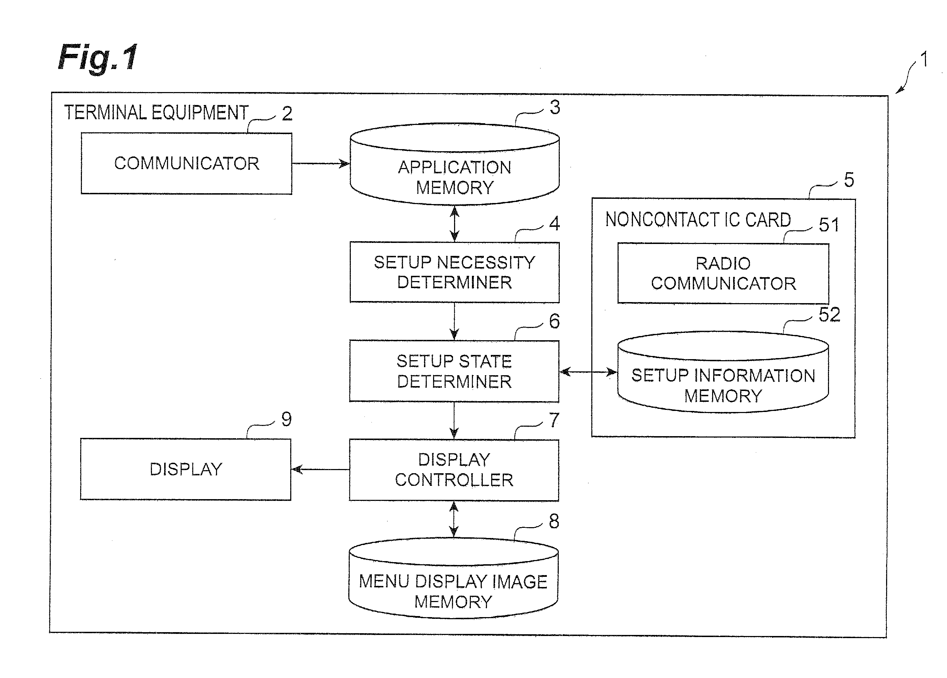

Fig. 1 is a block diagram showing a functional configuration of the terminal equipment 1 according to the present embodiment. The terminal equipment 1 is functionally composed of a communication unit 2, an application memory unit 3, a setup necessity determining unit 4 (setup necessity determining means), a noncontact IC card 5, a setup state determining unit 6 (setup state determining means), a display control unit 7 (application list displaying means), a menu display image memory unit 8, and a display unit 9 (application list displaying means). The noncontact IC card 5 includes a radio communication unit 51 and a setup information memory unit 52 (data memory area).

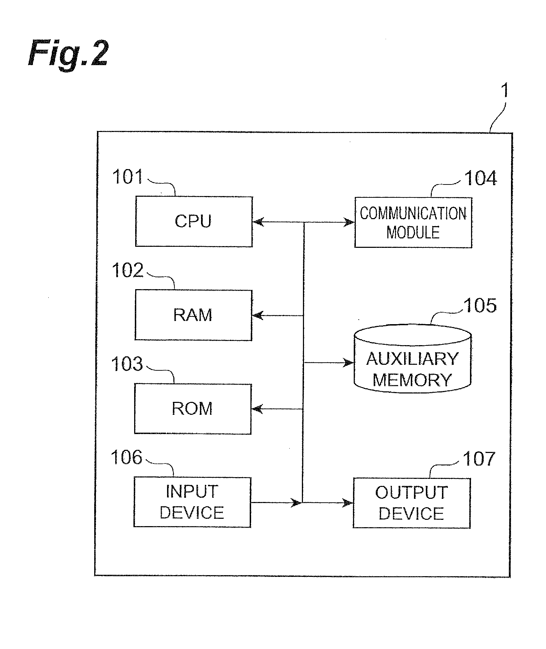

Fig. 2 is a hardware configuration diagram of the terminal equipment 1. The terminal equipment 1 is physically configured as a computer system, as shown in Fig. 2, including a CPU 101, a RAM 102 and a ROM 103 as main memory units, an auxiliary memory unit 105 such as a hard disk or a flash memory, an input unit 106 like a keyboard as an input device, an output unit 107 like a display, a communication module 104 as a data transceiving device, and so on. Each of the functions described in Fig. 1 is implemented by retrieving a predetermined computer software application onto the hardware such as the CPU 101 and the RAM 102, letting the communication module 104, the input unit 106, and the output unit 107 operate under control of the CPU 101, and reading and writing data from and into the RAM 102 and the auxiliary memory unit 105.

The terminal equipment 1 is comprised, for example, of a mobile communication terminal or the like. Since this terminal equipment 1 is equipped with the noncontact IC card 5, an application to perform a billing process or the like becomes executable through such a process that the radio communication unit 51 of the noncontact IC card 5 performs communication with an external IC card reader/writer device. Each of the functional elements will be described below in detail using Fig. 1.

The communication unit 2 downloads an application through a mobile communication network (not shown). The communication unit 2 stores the downloaded application into the application memory unit 3. The communication unit 2 also performs transmission and reception of audio signals for voice communication and data for data communication through the mobile communication network.

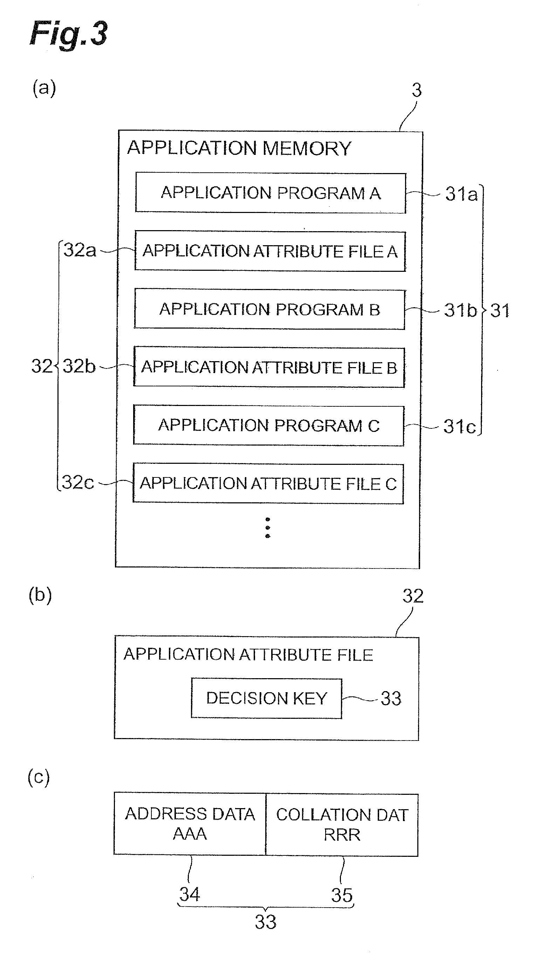

Fig. 3 (a) shows an example of an application configuration stored in the application memory unit 3. An application is composed of an application program 31 and an application attribute file 32. In the example shown in Fig. 3 (a), the application memory unit 3 stores application program A 31a and application attribute file A 32a, application program B 31 b and application attribute file B 32b, and application program C 31c and application attribute file C 32c.

An application to make use of the noncontact IC card 5 executes a process such as a billing process by performing communication through the radio communication unit 51, using setup data 52b stored in the setup information memory unit 52 of the noncontact IC card 5. Therefore, it is necessary for the predetermined setup data 52b to be preliminarily set up in the setup information memory unit 52. For this reason, as shown in Fig. 3 (b), the application attribute file 32 of the application to make use of the noncontact IC card 5 includes a decision key 33 to indicate the necessity for the setup of the setup data 52b in the setup information memory unit 52. If the application attribute file 32 includes no decision key 33, the corresponding application does not require the setup of the setup data 52b in the setup information memory unit 52.

Fig. 3 (c) shows an example of a data configuration of the decision key 33. The decision key 33 includes address data 34 and collation data 35. The address data 34 shows a storage location where the setup data 52b is to be set in the setup information memory unit 52. The address data 34 is, for example, a memory address showing the storage location in the setup information memory unit 52. If the setup information memory unit 52 has a hierarchical structure, the address data 34 is indicated by an identifier array of a path from the highest layer to the storage location of the setup data 52b. This identifier array identifies the path in order from the highest layer to the lowest layer to specify the storage location of the setup data 52b.

The collation data 35 is data having a predetermined pattern for deciding whether the setup data 52b is set in the setup information memory unit 52. Specifically, if the setup data 52b stored in the setup information memory unit 52 agrees with the collation data 35, it is decided that the predetermined setup data 52b is already set.

The setup necessity determining unit 4 refers to the application attribute file 32 stored in the application memory unit 3 and determines whether the predetermined setup data 52b to be used in running of the application needs to be preliminarily set in the setup information memory unit 52 by determining whether the application attribute file 32 includes the decision key 33 and the collation data 35. The setup necessity determining unit 4 sends the result of the determination to the setup state determining unit 6.

The noncontact IC card 5 has the radio communication unit 51 and setup information memory unit 52. An application executed by the terminal equipment 1 uses various pieces of information stored in the setup information memory unit 52, and performs communication through the radio communication unit 51 to execute the process such as the billing process.

The radio communication unit 51 can perform data communication, for example, in a short range of about 10 cm and at a rate of about several hundred kbps. The setup information memory unit 52 stores information to be used by applications. This information is, for example, a user name, a credit card number, and so on. The setup information memory unit 52 includes a restricted domain from and into which only a specific application or specific applications are allowed to read and write data, and a normal domain other than it.

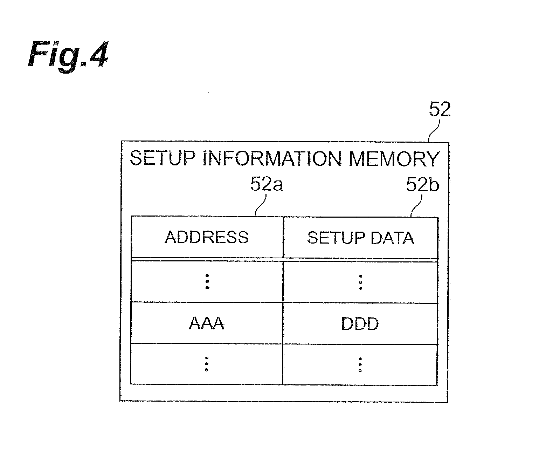

When the setup necessity determining unit 4 determines that the setup of the predetermined setup data is needed, the setup state determining unit 6 refers to the setup information memory unit 52 to determine whether the predetermined setup data is already set. Specifically, based on the address data 34 included in the decision key 33, the setup state determining unit 6 retrieves the setup data 52b stored at the storage location indicated by the address data 34, from the setup information memory unit 52, and determines whether the setup data 52b agrees with the collation data 35 retrieved by the setup necessity determining unit 4, thereby determining whether the predetermined setup data 52b is already set. Fig. 4 shows an example of a configuration of the setup information memory unit 52. In the example shown in Fig. 4, "DDD" is stored as the setup data 52b at the location of "AAA" as the address 52a. The setup state determining unit 6 sends the result of the determination to the display control unit 7.

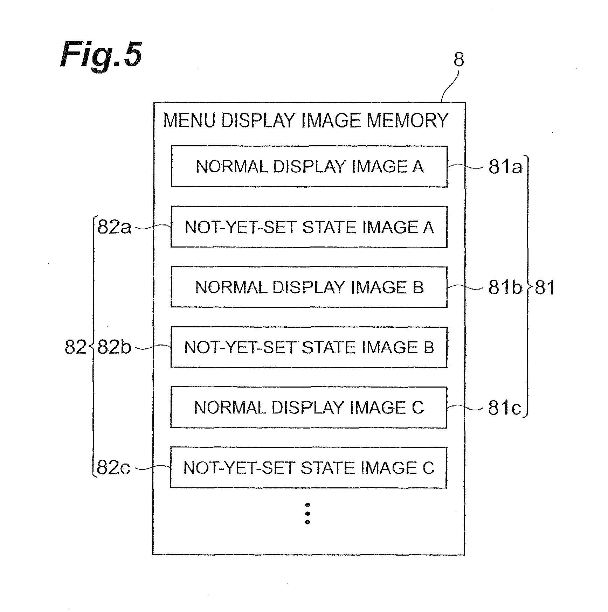

The display control unit 7 controls the display unit 9 to display a list of identification information of applications, based on the determinations made by the setup necessity determining unit 4 and the setup state determining unit 6. The identification information of applications is stored in the menu display image memory unit 8. Fig. 5 shows an example of a configuration of the menu display image memory unit 8. The menu display image memory unit 8 preliminarily stores a normal display image 81a-81c and a not-yet-set state image 82a-82c per application. Each not-yet-set state image 82a-82c has an image pattern that can be discriminated from the normal display image 81a-81c.

The normal display image 81 is used as identification information of an application if the setup necessity determining unit 4 determines that the setup data 52b does not need to be preliminarily set in the setup information memory unit 52, if the storage location in the setup information memory unit 52 indicated by the address data 34 is included in the restricted domain unavailable for retrieval of data, or if the setup state determining unit 6 determines that the predetermined setup data 52b is already set in the setup information memory unit 52. The normal display image 81 is also used as identification information of an application if no not-yet-set state image is stored in the menu display image memory unit 8. On the other hand, the not-yet-set state image is used as identification information of an application if the setup necessity determining unit 4 determines that the predetermined setup data 52b needs to be preliminarily set in the setup information memory unit 52 and if the setup state determining unit 6 determines that the predetermined setup data 52b is not yet set in the setup information memory unit 52.

It is assumed in the present embodiment that the not-yet-set state images 82a-82c are preliminarily stored in the menu display image memory unit 8, but it is also possible to adopt a configuration wherein the display control unit 9 superimposes a predetermined image on the normal display images 81a-81c to generate the not-yet-set state images 82a-82c.

The display unit 9 displays the list of identification information of applications sent from the display control unit 7.

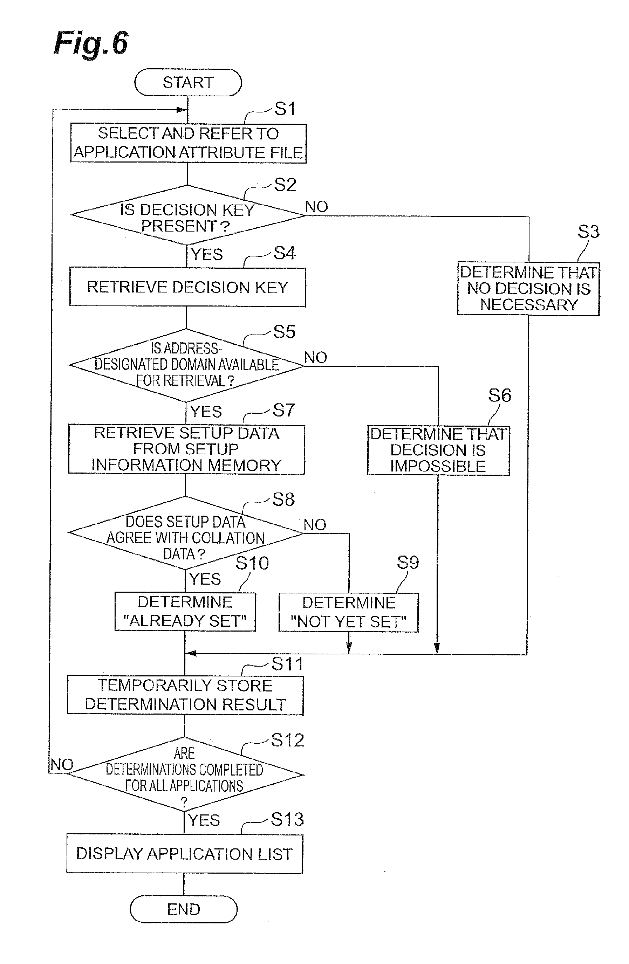

The below will describe the operation of the terminal equipment 1 according to the present embodiment. Fig. 6 is a drawing showing a processing procedure of an application list display method carried out by the terminal equipment 1.

For example, when the user gives an input to start an operation for displaying a list of identification information of applications, the setup necessity determining unit 4 first selects one of application programs 31 stored in the application memory unit 3 and refers to the application attribute file 32 of the application program 31 (S1). For example, in the example shown in Fig. 3 (a), the setup necessity determining unit 4 refers to the application attribute file 32a of the application program A 31 a.

Next, the setup necessity determining unit 4 determines whether the decision key 33 is included in the application attribute file 32, thereby to determine whether the setup data 52b needs to be preliminarily set in the setup information memory unit 52, concerning the selected application program 31 (S2). When the decision key 33 is not included, there is no need for deciding whether the predetermined setup data 52b is set in the setup information memory unit 52, and thus the setup necessity determining unit 4 determines that no decision is necessary (S3). On the other hand, when the decision key 33 is included, the processing procedure proceeds to step S4. For example, in the example shown in Fig. 3 (b), the decision key 33 is included in the application attribute file 32 and thus the setup necessity determining unit 4 determines that it is necessary to determine whether the predetermined setup data 52b is set in the setup information memory unit 52.

When the decision key 33 is included in the application attribute file 32 (S2), the setup necessity determining unit 4 retrieves the decision key 33 from the application memory unit 3 (S4). This decision key 33 is sent to the setup state determining unit 6.

The setup state determining unit 6 refers to the setup information memory unit 52 to attempt to retrieve the setup data 52b stored at the storage location indicated by the address data 34 included in the decision key 33 (S5). The setup information memory unit 52 includes the restricted domain from and into which only a specific application or specific applications are allowed to read and write data, and the other normal domain. If the storage location indicated by the address data 34 included in the decision key 33 is included in the restricted domain, the setup state determining unit 6 cannot retrieve the data out of the setup information memory unit 52. In this case, the setup state determining unit 6 determines that it is impossible to decide whether the predetermined setup data 52b is set in the setup information memory unit 52 (S6).

On the other hand, when the setup state determining unit 6 can retrieve the data from the setup information memory unit 52 (S5), the setup state determining unit 6 retrieves the setup data 52b stored at the storage location indicated by the address data 34 included in the decision key 33 (S7). In the examples shown in Figs. 3 (c) and 4, the setup state determining unit 6 refers to the setup information memory unit 52 to retrieve "DDD" of the setup data 52b stored at the storage location indicated by "AAA" of the address data 34.

Thereafter, the setup state determining unit 6 determines whether the setup data 52b agrees with the collation data 35 (S8). If they disagree, the setup state determining unit 6 determines that the predetermined setup data 52b is not yet set in the setup information memory unit 52 (S9). On the other hand, if they agree, the setup state determining unit 6 determines that the predetermined setup data is already set in the setup information memory unit 52 (S10). In the examples shown in Figs. 3 (c) and 4, "DDD" of the setup data 52b disagrees with "RRR" of the collation data 35 and thus the setup state determining unit 6 determines that the predetermined setup data 52b is not yet set in the setup information memory unit 52.

The display control unit 7 temporarily stores the result of the determination in step S3, step S6, step S9, or step S10 (S11).

The setup necessity determining unit 4 determines whether the determination on the necessity for the preliminary setup of the predetermined setup data 52b in the setup information memory unit 52 and the determination on whether the predetermined setup data 52b is already set in the setup information memory unit 52 are completed for all the applications stored in the application memory unit 3 (S 12). If the determinations are not completed yet for all the applications, the processing procedure returns to step S1.

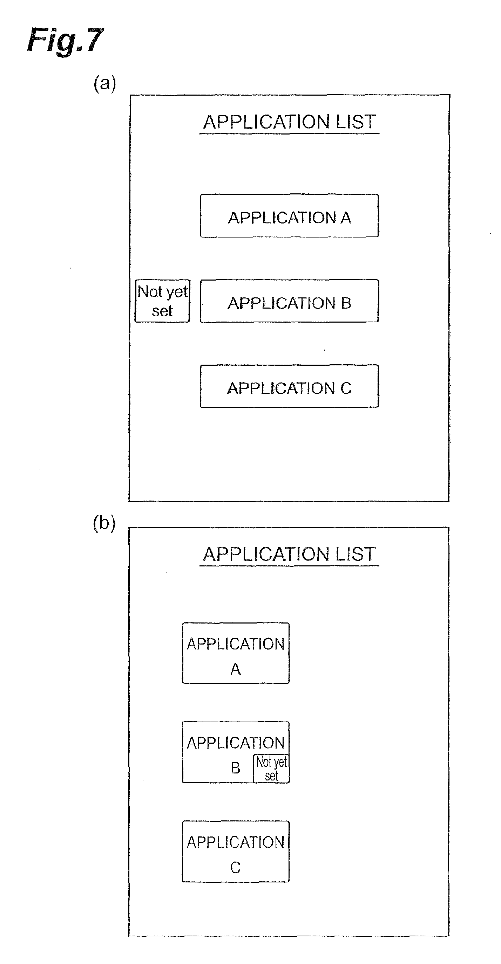

On the other hand, when the determinations are completed for all the applications, the display control unit 7 controls the display unit 9 to display a list of identification information of applications, based on the determination results (S13). Fig. 7 shows examples of display screens displayed on the display unit 9. Fig. 7 (a) and Fig. 7 (b) both show the examples wherein the normal display image 81 is selected for application A and application C and the not-yet-set state image 82 is selected for application B. Fig. 7 (a) shows that an indication indicative of characters of "Not yet set" to indicate that the predetermined setup data 52b is not yet set in the setup information memory unit 52 is included in the not-yet-set state image B 82b. Fig. 7 (b) shows that an indication indicative of characters of "Not yet set" is superimposed on the normal display image B 81b of application B. In either case, the user can readily recognize that the setup data is not yet set though the predetermined setup data needs to be set in the setup information memory unit 52, for use of application B. Usually, the setup data is set up upon first-time execution of an application, so as to urge the user to execute the application.

The below will describe the action and effect of the terminal equipment 1 according to the above-described embodiment. In the terminal equipment 1 of the embodiment, the setup necessity determining unit 4 and the setup state determining unit 6 determine the necessity for setup of the predetermined setup data 52b to be used in running of an application and when the predetermined setup data 52b is not yet set, the identification information of the application can be displayed in the list thereof in the discriminable state from that in the case of the predetermined setup data 52b being already set. Therefore, the user can readily recognize the setup state of the application requiring the setup of the predetermined setup data 52b in the setup information memory 52.

In the terminal equipment 1 of the present embodiment, the setup necessity determining unit 4 determines whether the collation data 35 is included in the application attribute file 32, thereby to determine whether the setup of the predetermined setup data 52b is needed. Therefore, it is feasible to readily decide on the necessity for the determination of the setup state.

In the terminal equipment 1 of the present embodiment, the setup state determining unit 6 retrieves the setup data 52b, based on the address data 34 included in the application attribute file 32, and determines whether this setup data 52b agrees with the collation data 35, thereby to determine the setup state of the predetermined setup data 52b. Therefore, it is feasible to readily recognize the setup state of the application.

## Claims

1. A terminal equipment for displaying a list including identification information of an executable application, said terminal equipment comprising:
attribute information storing means which stores attribute information of the application;
setup necessity determining means which refers to the attribute information of the application to determine whether predetermined information to be used in running of the application needs to be preliminarily set in a data memory area;
setup state determining means which refers to the data memory area to determine whether the predetermined information is already set in a predetermined format, when the setup necessity determining means determines that the predetermined information needs to be set; and
application list displaying means which, when the setup state determining means determines that the predetermined information is not set yet, displays the identification information of the application in a discriminable state from that in the case of the predetermined information being already set.

2. The terminal equipment according to claim 1,
wherein the setup necessity determining means determines whether the attribute information includes collation data, thereby determining whether the predetermined information needs to be set.

3. The terminal equipment according to claim 1 or 2,
wherein the attribute information includes address data indicative of a storage location where the predetermined information is to be set in the data memory area, and collation data, and
wherein, based on the address data, the setup state determining means retrieves setup data stored at the storage location indicated by the address data, from the data memory area and determines whether the setup data agrees with the collation data retrieved by the setup necessity determining means, thereby determining whether the predetermined information is already set.

4. The terminal equipment according to any one of claims 1 to 3,
wherein the data memory area is included in a noncontact IC card.

5. An application list display method in a terminal equipment for displaying a list including identification information of an executable application, said application list display method comprising:
an attribute information storing step of storing attribute information of the application;
a setup necessity determining step of referring to the attribute information of the application to determine whether predetermined information to be used in running of the application needs to be preliminarily set in a data memory area;
a setup state determining step of referring to the data memory area to determine whether the predetermined information is already set in a predetermined format, when the setup necessity determining step results in determining that the predetermined information needs to be set; and
an application list displaying step of, when the setup state determining step results in determining that the predetermined information is not set yet, displaying the identification information of the application in a discriminable state from that in the case of the predetermined information being already set.
